# EUROPEAN PATENT APPLICATION

(11) **EP 0 583 666 A1**
(43) Date of publication of application: **23.02.1994**
(21) Application number: 93112188.3
(22) Date of filing: 29.07.1993
(51) Int. Cl.: B64B 1/02, B64B 1/24

(54) **Omnidirectional propelling type airship**

(30) Priority: 20.08.1992 JP 221446/92
(71) Applicant: Bundo, Mutsuro, Oita-shi, Oita-ken (JP)
(72) Inventor: Bundo, Mutsuro, Oita-shi, Oita-ken (JP)
(74) Representative: Henkel, Feiler, Hänzel & Partner

(57) **Abstract**

An omnidirectional propelling type airship which can be propelled in any desired direction in the three-dimensional space including front-rear, upper-lower and left-right directions, is disclosed. The airship comprises a gas chamber (1, 2) capable of tightly sealing gas, gas having a specific gravity smaller than air and filled in the gas chamber, a section (14) capable of being loaded with men, cargoes and the like, and propelling means (6) supported in a gimbal fashion and capable of propelling in any arbitrary spacial direction.

## Description

### BACKGROUND OF THE INVENTION:

### 1. Field of the Invention:

The present invention relates to an airship which can be propelled in any desired direction in the three-dimensional space including front-rear, upper-lower and left-right directions.

### 2. Description of the Prior Art:

The airships in the prior art merely made flight by filling a gas chamber with gas having a specific gravity smaller than air and being loaded with horizontal propelling means. Although airships additionally provided with vertical propelling means have been also proposed, they have not yet been put in practical use.

These airships in the prior art mainly made forward flight, it was very difficult for them to perform rise, fall and retreat, and even in the case of airships provided with vertical propelling means, they were accompanied by difficulties in operations such that in order to change the propelling direction, for instance, from forward propelling to upward propelling, one of the propelling means must be stopped and the other propelling means must be started.

In order to resolve these problems of the airships in the prior art, the inventor of the present invention proposed previously airships provided with erecting/laying type propelling means which can momentarily change the propelling direction over the range including the front-rear and upper-lower directions in Japanese Patent Application No. 62-156478 (1987) and others.

While the proposed airship has a remarkable merit that the propelling direction can be chosen over the entire range within the plane including the front-rear and upper-lower directions as viewed in the flight direction by erecting or laying (turning) the propelling means without stopping to drive it, there still remains a room for improvement that movement in the left and right directions cannot be achieved only by the propelling means.

The above-described airships in the prior art involved the following problems to be resolved.

That is, among the airships in the prior art, those having propelling means separately for propelling in the horizontal and vertical directions, respectively, with respect to the axis of the airship, involved the problem that it was necessary to stop or start the respective propelling means each time when the propelling direction is to be changed and so landing at a narrow place was extremely difficult.

While the airships provided with the erecting/laying type propelling means which can select the propelling direction over the entire range within the plane including the front-rear and upper-lower directions with respect to the axis of the airship, had their take-off and landing performances at a narrow place remarkably improved, with respect to fine adjustment in the left and right directions, there was a shortcoming to be improved.

The present invention has been worked out for the purpose of resolving the above-mentioned problems in the prior art.

### SUMMARY OF THE INVENTION:

It is therefore one object of the present invention to provide an omnidirectional propelling type airship provided with propelling means which can propel the airship in any desired direction over the three-dimensional space including front-rear, upper-lower and left-right directions.

According to one feature of the present invention, there is provided an omnidirectional propelling type airship comprising a gas chamber capable of tightly sealing gas, gas having a specific gravity smaller than air and filled in the above-mentioned gas chamber, a section capable of being loaded with men, cargoes and the like, and propelling means supported in a gimbal fashion and capable of propelling in any arbitrary spacial direction.

According to the present invention, owing to the above-mentioned structural feature, the following advantages can be obtained:
That is, since the gas chamber filled with gas having a specific gravity smaller than air is provided with a section which can be loaded with men, cargoes and the like, the airship can float up in the air with men, cargoes and the like loaded thereon, without being provided with airfoils for generating a lift nor propelling means.

Furthermore, since the airship comprises propelling means supported in gimbal fashion and capable of propelling in any arbitrary spacial direction, the full of the airship can be moved in any arbitrary direction over the entire spacial directions including the front-rear, upper-lower and left-right directions.

Moreover, since the change of propelling direction is carried out by making use of single propelling means, the direction change and the movement can be achieved quickly.

The above-mentioned and other objects, features and advantages of the present invention will become more apparent by reference to the following description of one preferred embodiment of the invention taken in conjunction with the accompanying drawings.

### BRIEF DESCRIPTION OF THE DRAWINGS:

In the accompanying drawings:
Fig. 1 is a perspective view of an omnidirectional propelling type airship according to one preferred embodiment of the present invention;
Fig. 2 is a front view of the same airship;
Fig. 3 is an enlarged schematic view of a propelling device on the port as viewed in Fig. 1; and
Fig. 4 is perspective views showing relative positionings between an inner frame and an outer frame of a gimbal 9 in Fig. 3, the state where the inner frame is perpendicular to the outer frame (a propeller being directed in the horizontal front direction) is shown at (a), the state where the inner frame is positioned along the outer frame is shown at (b), and the state where the inner frame is inclined with respect to the outer frame is shown at (c).

### DESCRIPTION OF THE PREFERRED EMBODIMENT:

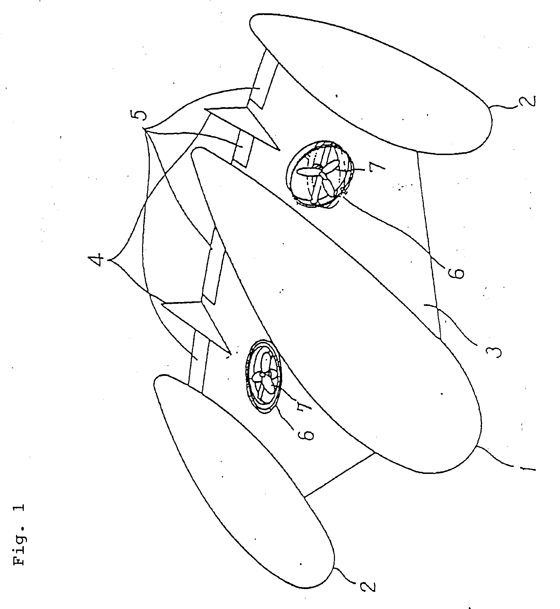

Now, the present invention will be described in greater detail in connection to one preferred embodiment of the invention illustrated in Figs. 1 to 4.

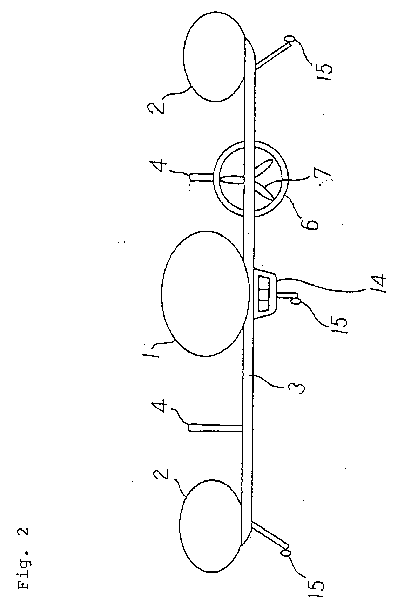

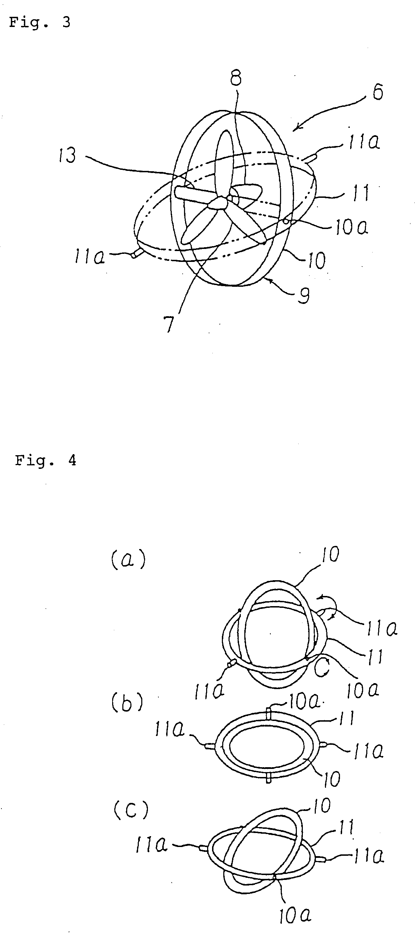

Among these figures, Fig. 1 is a perspective view depicted by overlooking the omnidirectional propelling type airship according to this preferred embodiment from the front-upper direction, Fig. 2 is a front view of the same preferred embodiment, Fig. 3 is an enlarged view of a propelling device 6 on the port as viewed in Fig. 1, and Fig. 4 is schematic perspective views showing relative movement between an inner frame 10 and an outer frame 11 of a gimbal 9 in Fig. 3 with the outer frame 11 held stationary along a horizontal airfoil 3 and with only the inner frame 10 moved. The state where the inner frame 10 is perpendicular to the outer frame 11, that is, with a propeller 7 held as directed in the direction of horizontal flight and aligned with the axis of the airship, is shown at (a); the state where the inner frame 10 is positioned along the outer frame 11, is shown at (b); and the state where the inner frame 10 is held inclined with respect to the outer frame 11, is shown at (c).

In Figs. 1 and 2, reference numeral 1 designates a middle fuselage provided in a tear drop shape along the flight direction so that a flight resistance may become small, the inside of which is constructed of a skelton made of appropriate light material, which makes necessary connection with horizontal airfoils 3, a cabin 14 and the like as will be described later, and whose outer shell is made of plastic fiber cloths subjected to a gas-tight treatment by means of weather-resistant oil-proof rubber-group paint to form a gas chamber. It is to be noted that the portions where metallic members penetrate are applied with necessary seals to intercept leakage of gas.

Reference numeral 2 designates outer fuselages provided on the left and on the right of the middle fuselage 1 with an appropriate intervals kept therebetween and also forming gas chambers, and though their size is smaller than the middle fuselage 1, their shape and construction are nearly similar to those of the middle fuselage 1, that is, they are formed in a similar tear-drop shape, their inner construction includes a light-weight skelton continuous to the horizontal airfoils 3, and their outer shell is made of the same material as the middle fuselage 1. However, since the outer fuselages 2 employ helium gas at the same pressure as the middle fuselage 1, a tensile strength of the outer shell of the outer fuselages 2 which depends upon its diameter could be smaller than that of the middle fuselage 1, and therefore, for the purpose of reducing a weight, a somewhat thinner outer shell than that of the middle fuselage is employed.

Reference numeral 3 designates horizontal airfoils provided for the purpose of connecting the middle fuselage 1 with the outer fuselages 2 and also generating a lift upon advancing flight, and as a matter of course, they also contribute to a rolling stability. For the purpose of increasing a lift and realizing a sufficient strength, a delta airfoil is employed. The so-called airfoil cross-section taken along the flight direction has a common airfoil shape, so that according to the Bernoulli's law, an airflow flowing along its upper surface may become high-velocity and low-pressure, while an airflow flowing along its lower surface may become low-velocity and high-pressure (normal pressure). A plurality of airfoil-shaped ribs made of light metal are covered by thin plates (outer shells) of high-strength aluminium and they are subjected to necessary reveting. Reference numeral 4 designates vertical tails erected vertically at the left and right positions of the rear portion of the horizontal airfoils 3, and numeral 5 designates elevators provided along the rear edge of the horizontal airfoils 3. Reference numeral 6 designates two left and right propelling devices equipped in holes formed so as to penetrate the horizontal airfoils 3 at the positions close to a lateral straight line passing the interval between a center of gravity of the entire hull and a center of aerodynamic forces set behind the center of gravity. In order to facilitate understanding of their operations, in Figs. 1 and 2 a propeller 7 on the port side is shown as directed in the flight direction, while another propeller 7 on the starboard side is shown as directed upwards.

Fig. 3 is a more detailed schematic view of the propelling device 6, and shows the state of the port side propelling device 6 in Fig. 1 at the same attitude but in an enlarged scale.

In order that the propelling device 6 can be directed all the directions in the space, the propeller 7 and an engine 8 are supported via a gimbal 9.

More particularly, in Fig. 3 reference numeral 7 designates a propeller, numeral 8 designates an engine for rotationally driving the propeller 7, and numeral 9 designates a gimbal, in which an inner frame 10 and an outer frame 11 are supported so as to be rotatable with respect to each other about orthogonal axes passing through the center. Reference numeral 10 designates an inner frame supporting at its center the propeller 7 and the engine 8 via a beam 13 and in itself rotatably supported by an outer frame 11 via two left and right inner shafts 10a as directed in the direction perpendicular to the flight direction, numeral 10a designates inner shafts for rotatably supporting the inner frame 10 from the outer frame 11, and while one inner shaft is hidden behind the inner frame 10 in Fig. 3, the inner shaft 10a is provided also on the back side of the beam 13. The outer frame 11 is rotatably supported from the horizontal airfoil 3 via two front and rear outer shafts 11a projected horizontally from its outside, and on its inside it pivotably supports the inner frame 10 via the inner shafts 10a in the above-described manner. In other words, the propeller 7 and the engine 8 are supported from the horizontal airfoil 3 in such manner that it may not be constrained by the orientation and inclination of the hull just as a compass in a gyrocompass. Reference numeral 11a designates outer shafts for pivotably supporting the outer frame 11 from the hull, that is, from the horizontal airfoil 3, and numeral 13 designates a beam extended in the inner frame 10 so as to pass through the center of the circle, having its opposite ends fixedly secured to the inner frame 10, and also rotatably mounting the propeller 7 and the engine 8 at its center.

Though omitted from illustration, the inner shaft 10a is directly connected to a shaft of a minute-speed large-torque irreversible servo motor fixedly secured to the outer frame 11, hence the inner shaft 10a can rotate by any arbitrary angle and can stop according to manipulation (control) by a pilot, but it does not rotate in response to a reactive torque applied from the inner frame 10 including the propeller 7 and the like. Likewise, the outer shaft 11a is also directly connected to a shaft of an irreversible servo motor fixedly secured to the horizontal airfoil 3. Accordingly, in Fig. 1 a notch for allowing the irreversible servo motor fixedly secured to the outer frame 11 to pass therethrough, would appear in the horizontal airfoil 3, but for the purpose of avoiding complexity, illustration of the notch is omitted.

In addition, the respective irreversible servo motors for the inner shaft 10a and the outer shaft 11a are subjected to joint control, and for instance, in order to turn the propeller 7 directed forwards (the state shown in Fig. 3) to the left forward direction inclined by 45° within a horizontal plane, although it is necessary to rotate the inner shaft 10a by 45° as soon as the outer shaft 11a was rotated by 90° to turn the outer frame 11 to the vertical attitude, provision is made such that these rotations can be achieved simultaneously in response to a one-shot manipulation of a control stick. Moreover, a computer and various sensors for detecting environmental conditions such as an airspeed, a wind direction and the like are provided in association, it is made possible to compensate external disturbances such as, for instance, a degree of influence of crosswind depending upon a distance between the center of gravity and the center of aerodynamic forces, and accordingly, even if the airship is operated in the same horizontal 45°-inclined direction, the rate of rotations of the respective irreversible servo motors for the inner shaft 10a and the outer shaft 11a would be different depending upon the attitude of the airship hull, the deviated wind, the wind velocity and the like.

Reference numeral 14 designates a cabin where men get on, and numeral 15 designates wheels for moving on the land.

On the front side of the cabin 14 is provided a control chamber, and in such section that even in the case of emergency, passengers and pilot may not undergo danger, are provided a high-pressure helium tank, a high-pressure gas pump and other necessary equipments. Before transferring to flight, helium gas is fed from the helium tank through pipings to swell the middle fuselage 1 and the outer fuselages 2, thereby their buoyancy is made close to their own weight, and on the contrary after landing, the helium gas in the middle fuselage 1 and the outer fuselages 2 is sucked out and filled at a high pressure in the helium tank by means of the high-pressure gas pump.

The swelling pressure in the middle fuselage 1 and the outer fuselages 2 is retained in the range of a pressure sufficient enough to expand the outer shell, which is equal to or higher by a necessary pressure increment than the atmospheric pressure, whereas the pressure in the helium tank naturally becomes a high pressure because a large volume of helium gas withdrawn from the middle fuselage 1 and the outer fuselages 2 is stored within a small volume of the tank. However, it is unnecessary to accommodate all the helium gas within the middle fuselage 1 and the outer fuselages 2 in the helium tank, but it is only necessary that the helium gas is accommodated in the helium tank to such extent that the buoyancy becomes sufficiently smaller than the weight of the hull, the outer shell may not be subjected to tensile fatigue or creep, nor minute leakage of helium gas due to its pressure higher than the atmospheric pressure may not be resulted.

Next, description will be made on operations of the airship having the above-described construction.

In order to take off, at first helium gas fed from the helium tank is filled in the middle fuselage 1 and the outer fuselages 2, and when the buoyancy has become close to the weight of the hull, the propelling device 6 is powered up.

Under a normal condition, the propellers 7 of the two propelling devices 6 on the left and on the right are directed upwards as shown on the port side in Fig. 1, and therefore, the airship goes up at the attitude shown in Fig. 1. At that time, since the propelling device 6 is equipped between the center of gravity of the hull and the center of aerodynamic forces (as viewed from the side), the moment of the center of gravity (downwards) on the front side with respect to a vertical line passing the propeller 7 producing an ascending force and the moment of the center of aerodynamic forces (downwards) behind the vertical line are mutually offset, and so, any special tilting would not occur in the front-rear direction.

When the airship has reached a desired height, the propellers 7 are directed forwards, and the airship transfers to advancing flight. As a matter of course, the ascending flight could be carried out simultaneously with the advancing flight by directing the propellers 7 in the obliquely forward-upward direction. For instance, in the case where it is desired to turn to the right, while the propeller 7 on the starboard side could be made to have no propelling force by changing its pitch to zero and the propeller 7 on the port side could be directed forwards, if the propeller 7 on the starboard side is directed backwards and the propeller 7 on the port side is directed forwards, turning can be done quickly. In the case of leftward turning, operations inverse to the above are effected. For example, in the case where it is desired to move in the obliquely leftward-downward direction, both the left and right propellers 7 are directed in the obliquely leftward-downward direction. In this connection, the outer frame 11 is held in the obliquely turned state with the inner frame 10 and the outer frame 11 kept flush with each other in the same plane. In the case where it is desired to descend and retreat in the obliquely leftward-downward-backward direction, starting from the just-described state, the inner frame 10 is rotated a little backwards and thereby the propeller 7 is directed in the obliquely leftward-downward-backward direction.

In this way, the propeller can be arbitrarily directed in every direction of the space, and the hull also moves in that direction. In addition, by directing the left and right propellers 7 in the opposite directions to each other, turnings, rolling and a combination thereof can be carried out arbitrarily. At that time, except for turning and rolling, since the propelling device 6 is positioned between the center of gravity and the center of aerodynamic forces, a moving attitude would almost not vary, and so, the passengers would not have bad feeling at all.

In an operation other than yawing (turning) and rolling, that is, in order to change the orientation of the airship in the pitch direction, the elevators 5 are manipulated like the conventional aircrafts.

While the vertical tails 4 are provided for the purpose of stabilization of orientation, these could be used also as rudders by making them rotatable within a horizontal plane, or else, a rudder could be provided separately. It is a matter of course that it is arbitrary to employ both the steering by these rudders and the change of orientation by means of the propelling devices 6.

In the above-described embodiment, since the horizontal airfoils 3 having a relatively large width in the front-rear direction (large chord) were used from the reason of increasing a lift and enhancing a mechanical strength, if a buoyancy relative to an own weight is made small, and upon advancing flight, if the total buoyancy and the own weight were to be balanced with each other owing to the lift of the horizontal airfoil 3, although there exist merits such that descending flight can be done quickly, an amount of feed and exhaust of helium gas to and from the middle fuselage and the outer fuselages 2 can be made small, and so, preparation for flight is made efficient, there exist demerits such that upon vertical movement or rolling, the large airfoil area serves as a resistant body. Accordingly, for instance, in the case of an airship constructed for the purpose of offering experience flight such as acrobatic flight to passengers, in order to make the propelling device 6 fully reveal its performance, the horizontal airfoil 3 cold be made narrow. The choice of design is arbitrary.

In addition, for the purpose of allowing to perform change of longitudinal direction quickly and for the purpose of achieving stable mooring by enlarging a weight-to-buoyancy ratio on the ground, water ballast tanks which can be automatically fed and exhaust sea water, pond water or other water and can be mutually give and receive water between front one and rear one, could be equipped in the lower portion at the center of the hull, for example, at the bottom of the cabin 14, or else in order to make change of a longitudinal moment as large as possible, at the front and the rear of the lower portion of the middle fuselage 1.

Thereby, for instance, in the case where it is desire to raise the front of the airship, if water is transferred from the front tank to the rear tank to shift the center of gravity to the behind of the position of the propellers 7 (the center of aerodynamic forces being already positioned at the rear) and the propellers 7 are directed upwards, then the both moments of the center of gravity and the center of aerodynamic forces with respect to the line of lift (vertical line) are directed downwards and the hull takes a front-raised state. In the case of lowering the front of the airship, inverse operations to the above-described are carried out.

In the case of mooring on the ground, the airship is moored with the both front and rear tanks filled with water. In order to feed and exhaust water, feed/exhaust means equipped on the hull such as pumps, pipings, necessary valves, hoses, etc. could be employed, or else, a ground installation preliminarily equipped at the location of take-off and landing of the airship could be employed.

Or, alternatively, longitudinal control could be performed by providing propelling deices at two front and rear locations for the purpose of change of longitudinal direction, making the pitches of the respective propellers opposite to each other, making the directions of the propellers opposite to each other or tilting the directions of the propellers in the opposite manner to each other, and thereby adjusting the vertical component of force.

For instance, at the time of rising, the range, where the moment of the center of gravity and the moment of the center of aerodynamic forces with respect to the upward propelling line of the propellers 7 offset with each other, would change depending upon the momentary state. That is, if a loaded weight changes, naturally an acting force changes, also a moment of the center of gravity changes because of the fact that change of a distance between the vertical lines passing through the center of gravity and passing through the acting point of upward propelling force (the acting point of raising force) may possibly occur, and if a rising velocity changes, an air resistance changes and a moment of the center of aerodynamic forces also changes, consequently, the above-mentioned offsetting range would change, and hence, an airship can not aways maintain a horizontal attitude. In such cases, attitude control could be carried out by adjusting the above-described water-ballast or adjusting the directions or propeller pitches of the front and rear propelling devices.

It is to be noted that modifications can be arbitrarily made such that the outer shells of the middle fuselage 1 and the outer fuselages 2 are made of materials other than plastic fibers, the outer plates of the horizontal airfoils 3 are not made of high-strength aluminium but made of other light metallic materials or made of organic material, and further they are made gas-tight and helium gas or the like is sealed therein.

As described above, according to this preferred embodiment, since an airship can be moved in every direction of the space as a matter of course, and control for yawing, pitching and rolling can be performed, the so-called pin-point take-off and landing can be achieved extremely easily, also even if a cross-wind or the like exists, by directing the propeller 7 in the direction for offsetting the force of the cross-wind in the propelling device 6, landing and take-off can be carried out as if under a calm condition, and therefore, the airship has an advantage that carry-in and carry-out in a large amount of mens and cargoes to and from a remote narrow place, a detached island and the like can be easily achieved as a daily routine.

In addition, it is possible to achieve acrobatic experience flight including every attitude and operation such as ascending, descending, side-slip, retreating, inverting, turning, spin or others, and so it has a merit that a reformative category can be developed in the field of the pleasure flight.

Furthermore, at the time of a rescue action, if the airship according to the illustrated embodiment is employed, since a strong blow-down wind caused by a rotor as is the case with a helicopter is not present, there exists a merit that an exhausted sufferer can be calmly rescued while hovering in the air.

Also, since the airship does not necessitate a runway and can achieve take-off and landing easily, it has an advantage that in place of the aircrafts and helicopters in the prior art, it can easily contribute to movement of men and marketing of goods between remote places, between towns and remote places or between islands.

Accordingly, in a mountain country or an island country, where a flat land is so little that a broad road cannot be constructed, also an airport necessitating a long runway cannot be constructed and a by-path cannot be constructed as intercepted by a channel or a bay, the airship according to the illustrated embodiment serves as most suitable means for promoting marketing of goods in a large amount, and so, it has a merit that it can become powerful facilities for quickly reducing a difference between the center and the country including communication information, culture in foods and interchange of personals.

As will be obvious from the detailed description of one preferred embodiment of the present invention, the present invention offers the following advantages.

That is, according to the present invention, since an airship can be propelled in any arbitrary direction in the space as loaded with men and cargoes, it can easily carry in and carry out a large amount of men and cargoes to and from a narrow place. Also, since it can easily hover at a point in the air and it does not have a blow-down wind as is the case with a helicopter, it can rescue many sufferers calmly. In addition, since it can easily maintain balance of wind forces, it can perform take-off and landing without influenced by a direction of wind. Furthermore, since as a matter of course the airship can move every direction in the space, and it can perform quick turning and quick rolling, it can offer acrobatic experience flights which have not yet been experienced by human beings, simultaneously to many passengers. Accordingly, the present invention results in large change and development in the field of leisure.

While a principle of the present invention has been described above in connection to one preferred embodiment of the invention, it is intended that all matter contained in the above description shall be interpreted to be illustrative and not in a limiting sense.

## Claims

1. An omnidirectional propelling type airship characterized in comprising a gas chamber capable of tightly sealing gas, gas having a specific gravity smaller than air and filled in said gas chamber, a section capable of being loaded with men, cargoes and the like, and propelling means supported in a gimbal fashion and capable of propelling in any arbitrary spacial direction.

2. An omnidirectional propelling type airship as claimed in Claim 1, characterized in that said gas chamber capable of tightly sealing gas consists of a middle fuselage having a tear drop shape with its rear end thinned with respect to a direction in reverse to flight and outer fuselages disposed on the respective sides of said middle fuselage with necessary intervals kept therebetween and having a shape smaller than and nearly similar to the middle fuselage.

3. An omnidirectional propelling type airship as claimed in Claim 2, characterized in comprising left and right horizontal airfoils connecting the middle fuselage and the outer fuselages, and vertical tails and elevators provided at rear portions of said horizontal airfoils.

4. An omnidirectional propelling type airship as claimed in Claim 2, characterized in that said propelling means is disposed in the proximity of a middle point between a center of gravity of a hull and a center of aerodynamic forces seeing from the side.
